# EUROPEAN PATENT APPLICATION

(11) **EP 4 653 623 A1**
(43) Date of publication of application: **26.11.2025**
(21) Application number: 23930943.8
(22) Date of filing: 21.12.2023
(51) Int. Cl.: E02F 9/16, B60H 1/00, E02F 9/00

(54) **CONSTRUCTION MACHINE**

(30) Priority: 30.03.2023 JP 2023056141
(71) Applicant: Hitachi Construction Machinery Tierra Co., Ltd., Shiga 528-0061, (JP)
(72) Inventor: YANAI, Yosuke, Koka-shi, Shiga 528-0061 (JP); YAMAMOTO, Daisuke, Koka-shi, Shiga 528-0061 (JP); MIYAHARA, Yasuhiro, Koka-shi, Shiga 528-0061 (JP)
(74) Representative: Manitz Finsterwald Patent- und Rechtsanwaltspartnerschaft mbB
(86) International application number: PCT/JP2023/045955
(87) International publication number: WO 2024/202324

(57) **Abstract**

The suction chamber (20), which serves as the suction part of the heating device (15), is mounted above the hydraulic oil tank (8). In this case, the hydraulic oil tank (8) has increased in temperature due to frictional heat, decompression, stirring resistance, etc., from the hydraulic pump, various actuators, control valves, etc., so the air that has flowed into the suction chamber (20) is pre-warmed by the hydraulic oil tank (8).

## Description

### TECHNICAL FIELD

The present invention relates to construction machinery equipped with a heating device that supplies warm air to the operating room.

### BACKGROUND ART

A hydraulic excavator, as a representative example of construction machinery, is composed of a self-propelled lower travel body, an upper swing body rotatably mounted on the lower travel body, and a working device pivotally mounted on the front side of the upper swing body.

The upper swing body of the hydraulic excavator includes a frame forming a support structure, a prime mover mounted on the frame, an operating room mounted on the frame for the operator to board, and a hydraulic oil tank mounted on the frame to store hydraulic oil supplied to the actuator. Additionally, the upper swing body is equipped with a heating device that warms the air drawn in from the intake section and supplies it to the operating room, allowing comfortable operation even in cold regions or refrigerated facilities (Patent Document 1).

### PRIOR ART DOCUMENT

### PATENT DOCUMENT

Patent Document 1: Japanese Patent No. 5349437

### SUMMARY OF THE INVENTION

Incidentally, the heating device equipped with the hydraulic excavator of Patent Document 1 is configured to draw in a portion of the air (external air) flowing in from outside towards the heat exchange device that cools the prime mover's cooling water, hydraulic oil, etc., and warm this drawn-in air to supply it to the operating room. In this configuration, when the outside air temperature is low, not only does it take time to warm the air, but the temperature of the warm air supplied from the heating device to the operating room also decreases, leading to a problem of reduced heating efficiency.

The present invention has been made in view of the above-mentioned problems of the prior art, and its object is to provide construction machinery that can prevent a decrease in the heating efficiency of the heating device.

The construction machinery of the present invention includes a frame forming a support structure, a hydraulic oil tank mounted on the frame to store hydraulic oil supplied to the actuator, an operating room mounted on the frame for the operator to board, and a heating device that warms the air drawn in from the intake section and supplies it to the operating room. In the construction machinery, the intake section of the heating device is mounted on the hydraulic oil tank.

According to the present invention, it is possible to draw pre-warmed air into the heating device, thereby preventing a decrease in the heating efficiency of the heating device.

### BRIEF DESCRIPTION OF THE DRAWINGS

Fig. 1 is a right side view of a hydraulic excavator according to an embodiment of the present invention.
Fig. 2 is a perspective view showing the upper swing body in Fig. 1.
Fig. 3 is a perspective view showing the upper swing body with the heat exchange cover and maintenance cover removed.
Fig. 4 is a right side view showing the upper swing body with the heat exchange cover, maintenance cover, right side of the cab, heat exchange device, etc., omitted.
Fig. 5 is a sectional view of the connection state of the heater body, intake chamber, intake duct, etc., as seen from the direction of arrow V-V in Fig. 4.
Fig. 6 is a perspective view showing the upper swing body of Fig. 3 with the air filter removed from the intake chamber.
Fig. 7 is a perspective view showing the intake chamber alone.

### MODE FOR CARRYING OUT THE INVENTION

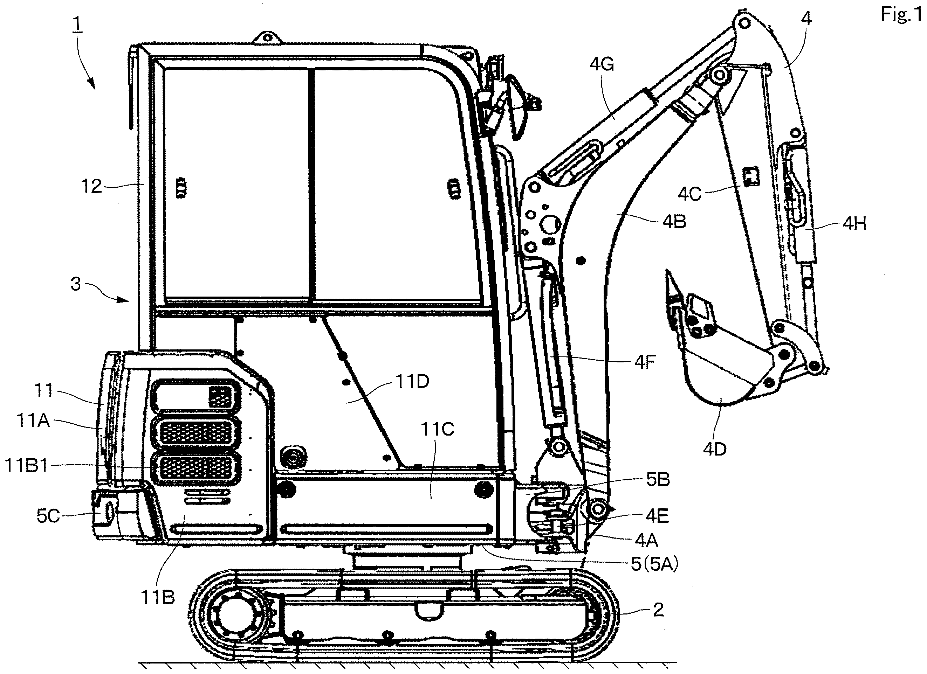

Hereinafter, an embodiment of the construction machinery according to the present invention will be described in detail with reference to Figs. 1 to 7, taking as an example the application to a hydraulic excavator.

In Fig. 1, the hydraulic excavator 1 is composed of a self-propelled crawler-type lower travel body 2, an upper swing body 3 rotatably mounted on the lower travel body 2, and a swing-type working device 4 pivotally and swingably mounted on the front side of the upper swing body 3.

Here, the hydraulic excavator 1 according to the embodiment is a model called a mini excavator, with a machine weight (total weight) of about 2 tons, which can be used for demolition work inside buildings and excavation work in narrow places such as streets.

The working device 4 includes a swing post 4A, which is swingably mounted on the support section 5B of the swing frame 5 described later, a boom 4B, which is rotatably mounted on the swing post 4A at the base end side of the boom 4B, an arm 4C, which is rotatably mounted on the distal end side of the boom 4B at the base end side of the arm 4C, and a bucket 4D, which is rotatably mounted on the distal end side of the arm 4C at the base end side of the bucket 4D. The working device 4 also includes a swing cylinder 4E for swinging the swing post 4A, a boom cylinder 4F for pivoting the boom 4B, an arm cylinder 4G for pivoting the arm 4C, and a bucket cylinder 4H for pivoting the bucket 4D. The bucket 4D is a type of working tool and can be replaced with other working tools such as a grapple. The swing cylinder 4E, boom cylinder 4F, arm cylinder 4G, and bucket cylinder 4H constitute hydraulic actuators.

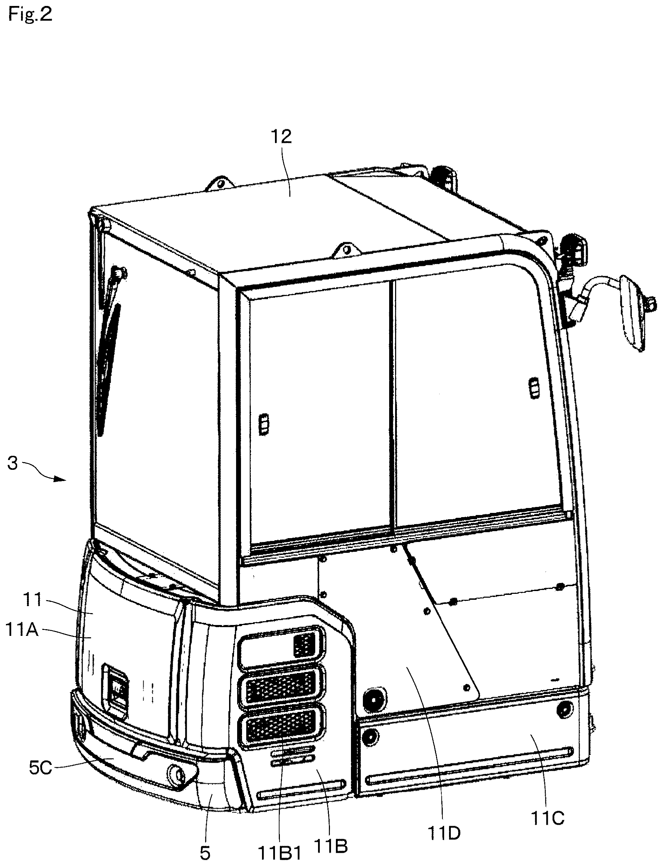

As shown in Figs. 2 to 4, the upper swing body 3 is composed of the swing frame 5 described later, an engine 6, a hydraulic oil tank 8, a seat base 9, an exterior cover 11, a cab 12, a heating device 15, and a ventilation gap 22.

The swing frame 5 as a frame is composed of, for example, a bottom plate 5A made of a thick metal plate in a rectangular shape extending in the longitudinal direction, a support portion 5B attached protruding forward at the front of the bottom plate 5A, and a counterweight 5C extending laterally and upwardly at the rear of the bottom plate 5A. The support portion 5B supports the working device 4 so that it can swing in the lateral direction. The counterweight 5C is formed as a heavy object to balance the weight with the working device 4. The counterweight 5C may be integrally formed with the bottom plate 5A, or it may be provided separately from the bottom plate 5A and attached to the bottom plate 5A using bolts.

Additionally, the swing frame 5 is mounted with a hydraulic oil tank chamber 5D that houses the hydraulic oil tank 8. The hydraulic oil tank chamber 5D is covered on the lower side by the bottom plate 5A of the swing frame 5, on the front and upper sides by the vertical surface portion 9A and lateral surface portion 9B of the seat base 9, and on the right side by the right side cover 11C and maintenance cover 11D of the exterior cover 11. As a result, the hydraulic oil tank chamber 5D is formed as an elongated rectangular space in the vertical direction. In addition to the hydraulic oil tank 8, the hydraulic oil tank chamber 5D is equipped with a suction chamber 20 and others. The hydraulic oil tank chamber 5D is positioned in front of the external air inlet 11B1 of the heat exchange cover 11B, which will be described later.

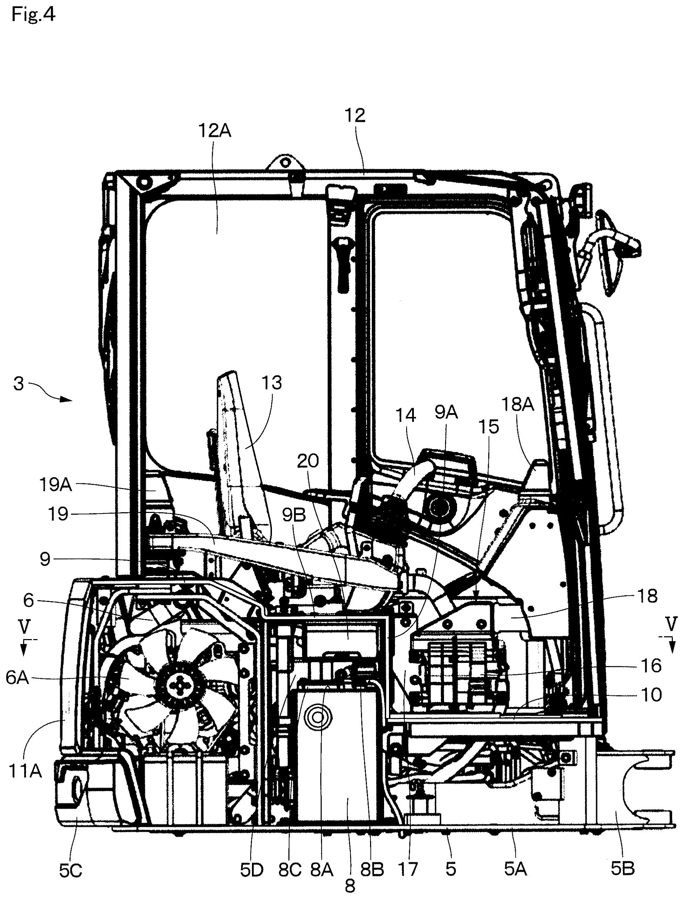

As shown in Fig. 4, the engine 6 as a prime mover is mounted on the rear side of the swing frame 5. The engine 6 is positioned in front of the counterweight 5C and is disposed on the bottom plate 5A in a transverse orientation extending in the lateral direction. On the right side of the engine 6, a cooling fan 6A is placed. The cooling fan 6A, by rotating, draws in external air from the external air inlet 11B1 of the heat exchange cover 11B, which constitutes the exterior cover 11 described later, and supplies it to the heat exchange device 7.

On the left side of the engine 6, a hydraulic pump (not shown) is mounted. This hydraulic pump is driven by the engine 6 to pressurize the hydraulic oil supplied from the hydraulic oil tank 8, described later, and supply it to each cylinder 4E to 4H of the working device 4, etc. It is also possible to use a hybrid prime mover consisting of an engine and an electric motor, or an electric motor as the prime mover.

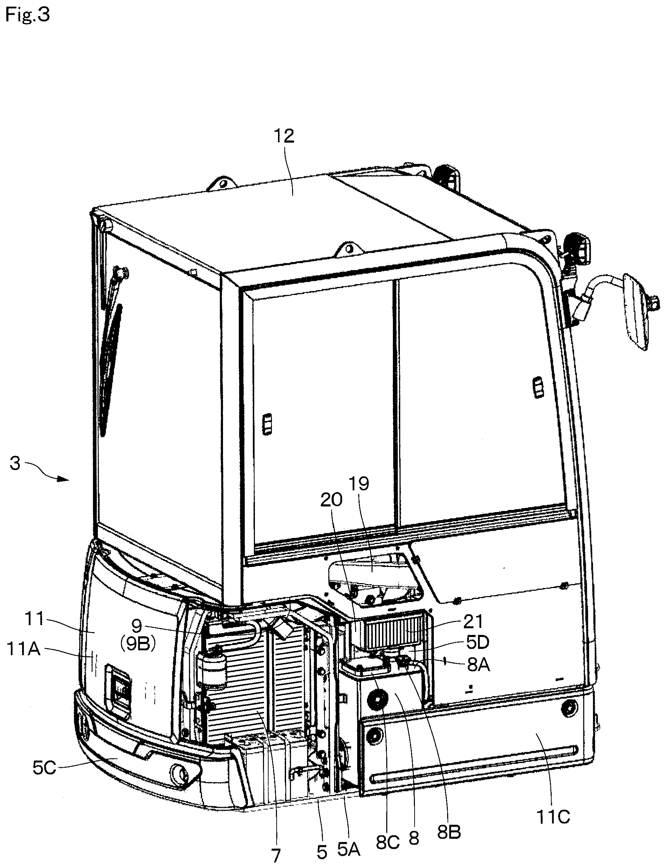

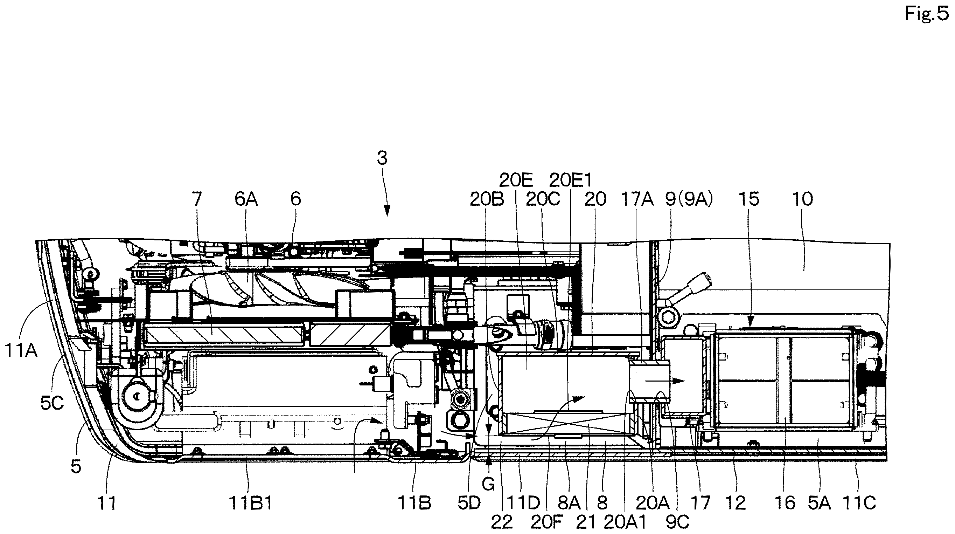

As shown in Figs. 3 and 5, the heat exchange device 7 is mounted on the right rear side of the swing frame 5 so as to face the cooling fan 6A of the engine 6. The heat exchange device 7 consists of a radiator for cooling engine coolant, an oil cooler for cooling hydraulic oil, and the like.

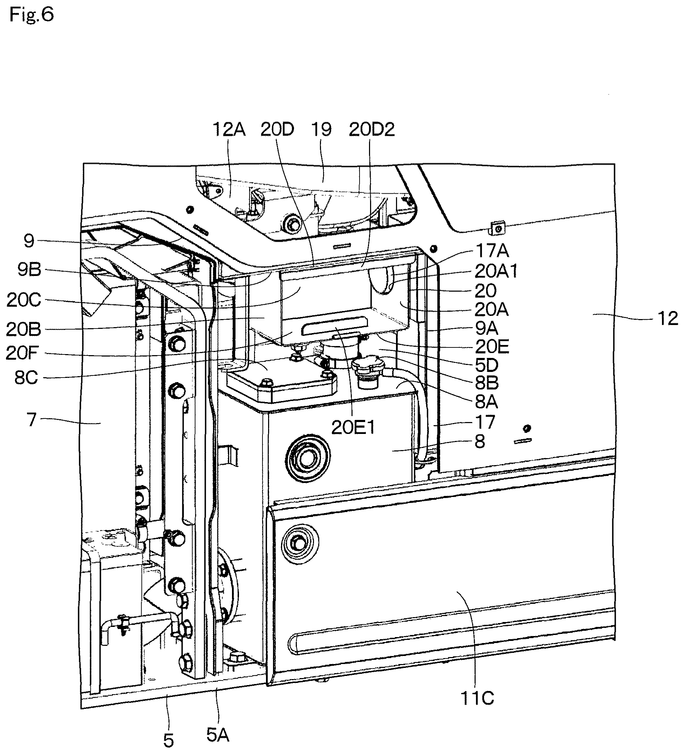

The hydraulic oil tank 8 is mounted on the right side of the swing frame 5. The hydraulic oil tank 8 is a container for storing hydraulic oil supplied to actuators such as each cylinder 4E to 4H of the working device 4, a swing motor, and a travel motor (all not shown). Additionally, the hydraulic oil tank 8 is a container with an elongated rectangular shape (box shape) in the vertical direction. As shown in Fig. 6, the upper surface 8A of the hydraulic oil tank 8 is equipped with a filling port 8B for hydraulic oil, an insertion port 8C for sensors to detect the state of the hydraulic oil, and the like.

The hydraulic oil tank 8 is positioned in front of the heat exchange device 7 and behind the heating device 15, which will be described later. Additionally, an intake chamber 20, which will be described later, is disposed on the upper surface 8A of the hydraulic oil tank 8. However, the intake chamber 20 has a detachable structure, and when removed, it allows for opening the filling port 8B to fill hydraulic oil or opening the insertion port 8C to inspect sensors and the like.

Here, the hydraulic oil increases in temperature due to frictional heat, decompression, stirring resistance, etc., from the hydraulic pump, various actuators, control valves, and the like. Then, the hydraulic oil tank 8, to which the temperature-increased hydraulic oil is returned, will also increase in temperature. As a result, even in a work environment where the external temperature (outside air temperature, indoor temperature) is low, the hydraulic oil tank 8 will have a higher temperature than the external temperature.

As shown in Fig. 4, the seat base 9 is positioned on the rear side of the swing frame 5 and is mounted on the swing frame 5. The seat base 9 is positioned above the engine 6 and the hydraulic oil tank 8 and supports the operator's seat 13, which will be described later. The seat base 9 is composed of a vertical surface portion 9A extending from the front side to the upper side of the hydraulic oil tank 8, and a lateral surface portion 9B extending from the upper part of the vertical surface portion 9A to the rear side. As a result, the seat base 9 is positioned above the hydraulic oil tank 8 and constitutes a partition plate that separates the hydraulic oil tank chamber 5D from the operating room 12A within the cab 12, which will be described later. The vertical surface portion 9A faces the front of the hydraulic oil tank 8, and at its upper part, an insertion port 9C (see Fig. 5) is equipped through which the connection pipe 17A of the intake duct 17, which will be described later, is inserted.

The height position of the lateral surface part 9B is set to a position that allows space for opening the filling port 8B at the top of the hydraulic oil tank 8 to fill hydraulic oil, and for opening the insertion port 8C to inspect or replace sensors, etc.

The floor 10 extends forward from the lower part of the vertical surface part 9A. The floor 10 is positioned above the swing frame 5. On the right side of the floor 10, the heater body 16 of the heating device 15, which will be described later, is mounted.

The exterior cover 11 is mounted on the swing frame 5. The exterior cover 11 covers the engine 6, hydraulic pump, heat exchanger 7, hydraulic oil tank 8, and the heating device 15, which will be described later. As shown in FIGS. 2 and 5, the exterior cover 11 includes an engine cover 11A extending upward from the counterweight 5C to cover the rear side of the engine 6, a pump cover (not shown) extending forward to cover the left side of the hydraulic pump in continuation with the left side of the engine cover 11A, and a heat exchange cover 11B extending forward to cover the right side of the heat exchanger 7 in continuation with the right side of the engine cover 11A. Additionally, the exterior cover 11 includes a left side cover (not shown) extending forward from the pump cover, positioned between the swing frame 5 and the floor 10, a right side cover 11C extending forward from the heat exchange cover 11B, positioned between the swing frame 5 and the floor 10, and a maintenance cover 11D equipped above the right side cover 11C and in front of the heat exchange cover 11B.

The heat exchange cover 11B has an external air inlet 11B1 for allowing external air to flow in at a position facing the heat exchanger 7. As shown in FIG. 5, the external air inlet 11B1 is located at a position distant from the suction port 20F of the suction chamber 20, which will be described later, specifically, it is positioned behind the suction chamber 20. In other words, the external air inlet 11B1 is positioned on the heat exchanger 7 side in the vehicle's longitudinal direction.

The maintenance cover 11D covers the area from the middle part of the hydraulic oil tank 8 to the upper part of the hydraulic oil tank 8, allowing it to be opened and closed. This allows for inspection, cleaning, replacement, and other maintenance tasks on the air filter 21 of the suction chamber 20, which will be described later, when the maintenance cover 11D is removed. Additionally, when the suction chamber 20 is removed, tasks such as filling hydraulic oil, inspecting sensors, and replacing components can be performed.

The cab 12 is mounted on the upper side of the swing frame 5. As shown in FIG. 4, the interior of the cab 12 is the operating room 12A where the operator boards. In the operating room 12A within the cab 12, a driver's seat 13 is mounted on the lateral surface part 9B of the seat base 9. Additionally, at the front position of the floor 10 in front of the driver's seat 13, there are control levers and pedals (not shown) for driving the lower travel body 2. Furthermore, on both sides of the driver's seat 13, there are control levers 14 (only the right side is shown) for operating the working device 4 and others.

Next, the configuration and effects of the heating device 15 equipped with the suction chamber 20, which is a characteristic part of this embodiment, will be described.

The heating device 15 warms the air drawn in from the suction chamber 20, which will be described later, with the heater body 16 and supplies it into the cab 12 with a blower fan (not shown) . The heating device 15 is composed of the heater body 16, suction duct 17, front supply duct 18, rear supply duct 19, and suction chamber 20.

The heater body 16 is mounted, for example, on the right side of the floor 10. The heater body 16 includes, for example, a heater core through which cooling water that has increased in temperature by cooling the engine 6 circulates, and a blower (both not shown) that blows air drawn from outside towards the heater core. This allows the heater body 16 to warm (heat) the air drawn in from outside by the blower using the heater core and discharge the warmed air. Therefore, the heater body 16 can adjust the temperature of the operating room 12A by increasing or decreasing the airflow of the blower. On the suction side (rear position) of the heater body 16, a suction duct 17 is connected following the blower, and on the supply side located above the heater body 16, supply ducts 18 and 19 are connected. The heater body 16 can also be of an electric type that warms the air using heating wires or the like.

The suction duct 17 is formed as a rectangular tubular body extending vertically along the vertical surface part 9A of the seat base 9. The suction duct 17 reaches the insertion opening 9C equipped with the vertical surface portion 9A at the upstream upper section, and the downstream lower section is connected to the suction side of the heater body 16. Additionally, as shown in FIG. 5, a connecting pipe 17A extending rearward is mounted on the upper rear surface of the suction duct 17. The connecting pipe 17A has its tip part (rear end part) inserted into the insertion opening 9C of the sheet base 9, and it is inserted into the connecting pipe insertion port 20A1 of the front plate part 20A that constitutes the suction chamber 20. Thus, the connecting pipe 17A connects the suction chamber 20 and the suction duct 17.

The suction duct 17 is formed as a straight duct extending vertically between the heater body 16 and the suction chamber 20. Therefore, the suction duct 17 can connect the heater body 16 and the suction chamber 20 over a short distance. As a result, the resistance to air flow is reduced in the suction duct 17, allowing the air to circulate smoothly.

The upstream side of the front supply duct 18 is connected to the supply side located at the top of the heater body 16. On the other hand, the downstream side of the front supply duct 18 forms the front outlet 18A at the right front corner of the cab 12. The front supply duct 18 can blow warm air from the heater body 16 towards the operator from the front outlet 18A.

The upstream side of the rear supply duct 19 is connected to the supply side located at the top of the heater body 16. On the other hand, the downstream side of the rear supply duct 19 forms the rear outlet 19A at the rear of the cab 12. The rear supply duct 19 can blow warm air from the heater body 16 towards the operator from the rear outlet 19A.

The suction chamber 20, as the suction part, constitutes the air inlet portion of the heating device 15. The suction chamber 20 is located in the hydraulic oil tank chamber 5D and is mounted above the hydraulic oil tank 8. The suction chamber 20 is positioned between the upper surface 8A of the hydraulic oil tank 8 and the lateral surface part 9B of the seat base 9. And, the suction chamber 20 is detachably mounted on the lower side of the lateral surface part 9B of the seat base 9.

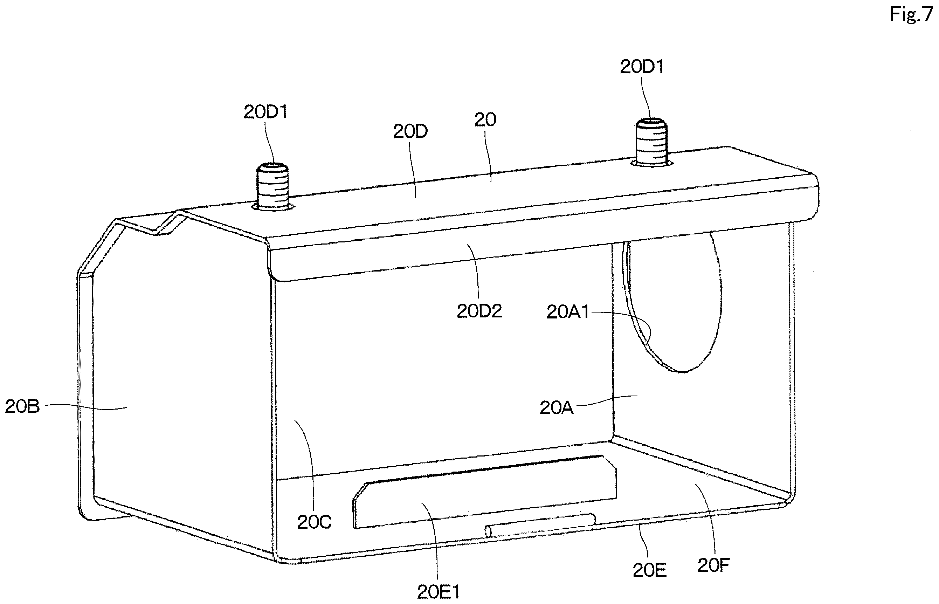

As shown in FIGS. 6 and 7, the suction chamber 20 includes a front plate part 20A facing the vertical surface part 9A of the seat base 9, a rear plate part 20B facing away from the front plate part 20A, a left plate part 20C extending in the longitudinal direction across the left edges of the front plate part 20A and the rear plate part 20B, an upper plate part 20D extending in the longitudinal direction across the upper edges of the front plate part 20A and the rear plate part 20B, and a lower plate part 20E facing away from the upper plate part 20D and extending in the longitudinal direction across the lower edges of the front plate part 20A and the rear plate part 20B. Thus, the suction chamber 20 is formed in a right-open box shape with a suction port 20F on the right side facing the maintenance cover 11D of the exterior cover 11.

The front plate part 20A has a connecting pipe insertion port 20A1 formed near the upper side. The connecting pipe 17A of the suction duct 17, which constitutes the heating device 15, is inserted into this connecting pipe insertion port 20A1. The gap between the connecting pipe insertion port 20A1 and the connecting pipe 17A is filled with, for example, a foamed resin material (seal member) . Since the connecting pipe insertion port 20A1 is located near the upper side, the connecting pipe 17A is less likely to suck in dust or moisture from within the suction chamber 20.

The upper plate part 20D is mounted, for example, two bolts 20D1 extending upward. These two bolts 20D1 are inserted into bolt insertion holes mounted on the lateral surface part 9B of the seat base 9, and nuts (not shown) are screwed on from above. Thus, the suction chamber 20 is detachably mounted to the seat base 9 with the upper plate part 20D in close contact with the lower surface of the lateral surface part 9B.

At the right end of the upper plate part 20D on the suction port 20F side, a filter stopper 20D2 is mounted extending downward. Additionally, at the right end of the lower plate part 20E, a filter stopper 20E1 is mounted extending upward to face the filter stopper 20D2 of the upper plate part 20D in the vertical direction. Thus, as shown in FIGS. 3 and 5, an air filter 21 can be detachably mounted at a predetermined position in the suction port 20F of the suction chamber 20.

Furthermore, since the suction port 20F opens laterally, the air filter 21 attached to this suction port 20F can be easily inspected, cleaned, and replaced by simply removing the maintenance cover 11D.

Here, the suction chamber 20 is spaced apart from the maintenance cover 11D of the exterior cover 11 by a gap dimension G at the suction port 20F. As a result, a ventilation gap 22 is provided between the suction port 20F and the maintenance cover 11D. Therefore, as indicated by the arrow in Figure 5, the suction chamber 20 can draw in outside air that has flowed into the hydraulic oil tank chamber 5D from the external air inlet 11B1 of the heat exchange cover 11B through the ventilation gap 22 from the suction port 20F.

Additionally, since the suction chamber 20 is positioned on the right side of the upper swing body 3, the heater body 16, suction duct 17, and suction chamber 20 are aligned in a single row in the longitudinal direction. This allows for a short connection distance from the suction chamber 20 to the heater body 16, enabling smooth air circulation.

The hydraulic excavator 1 according to this embodiment has the above-described configuration, and its operation will be described next.

The operator boards the operating room 12A within the cab 12 and sits in the driver's seat 13. The operator seated in the driver's seat 13 can drive the lower travel body 2 by operating the control lever for traveling. On the other hand, the operator can perform excavation work and the like by operating the work control lever 14 to swing the upper swing body 3 or to swing and rotate the working device 4.

When the temperature at the work site is low, such as in cold regions or refrigerated facilities, the heating device 15 is activated. The heating device 15 is activated by operating a switch (not shown) equipped in the operating room 12A to start the heater main body 16.

As a result, the heating device 15 draws in external air from the suction chamber 20 using a blower. At this time, as indicated by the arrow in Figure 5, external air flows into the exterior cover 11 through the external air inlet 11B1 provided in the heat exchange cover 11B of the exterior cover 11, and flows forward toward the suction chamber 20. The air that has flowed to the suction chamber 20 is drawn into the suction chamber 20 through the suction port 20F via the ventilation gap 22. Additionally, the air drawn into the suction chamber 20 flows into the heater main body 16 through the suction duct 17.

The heater main body 16 warms the incoming air with the heater core and then discharges it into the front supply duct 18 and the rear supply duct 19 using a blower fan. As a result, the heating device 15 can blow warmed air into the cab 12 from the front outlet 18A and the rear outlet 19A.

When the temperature outside the cab 12 (outside air temperature) is low, and the air is directly taken into the heater body 16, the heating device 15 will warm the cold air in the heater body 16. As a result, not only does it take time to warm the air, but the temperature of the warm air supplied from the heating device 15 to the operating room 12A of the cab 12 decreases, leading to a reduction in heating efficiency.

However, according to this embodiment, the suction chamber 20, which serves as the suction part of the heating device 15, is mounted above the hydraulic oil tank 8. In this case, the hydraulic oil in the hydraulic oil tank 8 has increased in temperature due to frictional heat, decompression, stirring resistance, etc., from the hydraulic pump, various actuators, control valves, etc. (all not shown), so the hydraulic oil tank 8 is at a higher temperature than the external temperature.

Therefore, the air that has flowed into the suction chamber 20 is warmed by the heat of the hydraulic oil tank 8 and then supplied to the heater body 16. This allows the pre-warmed air to be drawn into the heater body 16 of the heating device 15, thereby enabling the temperature of the air discharged from the heater body 16 into the operating room 12A to be increased. Therefore, it is possible to prevent a decrease in the heating efficiency of the heating device 15. In other words, if the heater main body 16 is electric, power consumption can be kept low. Additionally, the heating performance of the heater main body 16 can be reduced, and the heater main body 16 can be miniaturized.

The swing frame 5 is provided with a hydraulic oil tank chamber 5D that houses the hydraulic oil tank 8. Additionally, a seat base 9, which serves as a partition plate separating the hydraulic oil tank chamber 5D and the operating room 12A, is mounted above the hydraulic oil tank 8 on the swing frame 5. The suction chamber 20, serving as the suction part of the heating device 15, is mounted in the hydraulic oil tank chamber 5D and is positioned between the upper surface 8A of the hydraulic oil tank 8 and the side surface part 9B of the seat base 9, detachably mounted to the side surface part 9B. Therefore, when the suction chamber 20 is removed from the seat base 9, a work space can be secured above the hydraulic oil tank 8. This allows for the opening of the filling port 8B provided on the upper surface 8A of the hydraulic oil tank 8 to fill hydraulic oil, or the opening of the insertion port 8C to inspect or replace sensors, etc.

The suction part is formed as a box-shaped suction chamber 20. This allows for the temporary storage of air to be supplied to the heater main body 16. Therefore, the air before being supplied to the heater main body 16 stays longer above the high-temperature hydraulic oil tank 8, allowing the air to be warmed more.

The swing frame 5 is provided with a hydraulic oil tank chamber 5D that houses the hydraulic oil tank 8. Additionally, the hydraulic oil tank chamber 5D is formed by an exterior cover 11 provided on the swing frame 5. On the other hand, the suction chamber 20 is provided in the hydraulic oil tank chamber 5D, with the side facing the exterior cover 11 being open, and is equipped with a suction port 20F where an air filter 21 is mounted. Furthermore, the heat exchange cover 11B of the exterior cover 11 has an external air inlet 11B1 at a position distanced in the longitudinal direction from the position facing the suction port 20F. In addition, a ventilation gap 22 is provided between the suction port 20F and the heat exchange cover 11B of the exterior cover 11 to draw in external air that has flowed into the hydraulic oil tank chamber 5D from the external air inlet 11B1 through the suction port 20F.

Therefore, the external air of the operating room 12A flows within the exterior cover 11 to the suction chamber 20, which is distanced from the external air inlet 11B1. As a result, it is possible to prevent rainwater from adhering to the air filter 21 mounted in the suction chamber 20, and to reduce clogging and deterioration of the air filter 21. Furthermore, by passing around the high-temperature hydraulic oil tank, it is possible to take in air that is warmer than directly taking in external air.

In the embodiment, the seat base 9 was used as an example of a partition plate separating the hydraulic oil tank chamber 5D and the operating room 12A. However, the present invention is not limited to this, and a plate body mounted separately from the seat base 9 may be used as the partition plate.

In the embodiment, a crawler-type hydraulic excavator 1 was used as an example of construction machinery. However, the present invention is not limited to this and may be applied to a hydraulic excavator equipped with a wheeled lower travel body, for example. Furthermore, it can be widely applied to other construction machinery such as wheel loaders, hydraulic cranes, etc.

### DESCRIPTION OF REFERENCE NUMERALS

1: Hydraulic excavator
4: Working device
4E: Swing cylinder (actuator)
4F: Boom cylinder (actuator)
4G: Arm cylinder (actuator)
4H: Bucket cylinder (actuator)
5: Swing frame (frame)
5D: Hydraulic oil tank chamber
8: Hydraulic oil tank
8A: Upper surface
9: Seat base (partition plate)
11: Exterior cover
11B: Heat exchange cover
11B1: Outside air inlet
12: Cab
12A: Operating room
13: Operator's seat
15: Heating device
16: Heater body
17: Suction duct
20: Suction chamber (suction part)
20F: Suction port
21: Air filter
22: Ventilation gap

## Claims

1. The construction machinery comprising;
a frame forming a support structure, a hydraulic oil tank mounted in the frame for storing hydraulic oil supplied to an actuator, an operating room mounted in the frame for the operator to board, and a heating device that warms the air sucked from the suction part and supplies it to the operating room;
the suction part of the heating device is provided above the hydraulic oil tank.

2. The construction machinery according to claim 1,
wherein the construction machinery includes a hydraulic oil tank chamber mounted in the frame for accommodating the hydraulic oil tank;
a partition plate is attached on the frame, positioned above the hydraulic oil tank, to partition the hydraulic oil tank chamber from the operating room;
the suction part is provided in the hydraulic oil tank chamber, positioned between the hydraulic oil tank and the partition plate, and is detachably attached to the partition plate.

3. The construction machinery according to claim 1,
wherein the suction part is formed as a box-shaped suction chamber.

4. The construction machinery according to claim 1,
wherein the construction machinery includes a hydraulic oil tank chamber mounted in the frame for accommodating the hydraulic oil tank;
the hydraulic oil tank chamber is formed by an exterior cover mounted on the frame, the suction part is provided in the hydraulic oil tank chamber;
the suction part has a side facing the exterior cover that is open, and is provided with a suction port where an air filter is mounted;
the exterior cover has an outside air inlet at a position distanced in the longitudinal direction from the position facing the suction port;
a ventilation gap is provided between the suction port and the exterior cover for sucking in outside air that has flowed into the hydraulic oil tank chamber from the outside air inlet.
